# EUROPEAN PATENT APPLICATION

(11) **EP 2 015 492 A1**
(43) Date of publication of application: **14.01.2009**
(21) Application number: 07012011.8
(22) Date of filing: 19.06.2007
(51) Int. Cl.: H04L 1/00, H04L 1/18

(54) **Method for channel quality reporting, wireless communication device with channel quality reporting structures**

(71) Applicant: Nokia Siemens Networks Oy, 02610 Espoo (FI)
(72) Inventor: Halfmann, Rüdiger, 67697 Otterberg (DE); Luo, Jijun, 80797 München (DE); Schulz, Egon, Dr., 80993 München (DE); Xiang, Yikang, 81549 München (DE)
(74) Representative: Bruglachner, Thomas E.

(57) **Abstract**

The invention relates to a method for channel quality reporting amongst a first and a second device for wireless communication capable of communicating via plural wireless channels comprises the steps of the first device sending to the second device subset information designating one or more wireless channels or subsets of wireless channels of the plural wireless channels, and the second device sending to the first device channel quality information in relation to the designated wireless channels or in relation to the designated subsets or in relation to the wireless channels of the designated subsets.

## Description

The invention relates to a method for channel quality reporting and to wireless communication devices having channel quality reporting structures.

Wireless devices communicate through channels preferably with base stations. Plural channels are generally available, and one or plural or even all of them may be used for communication amongst two particular devices. Channels may be of different frequency within a given frequency range.

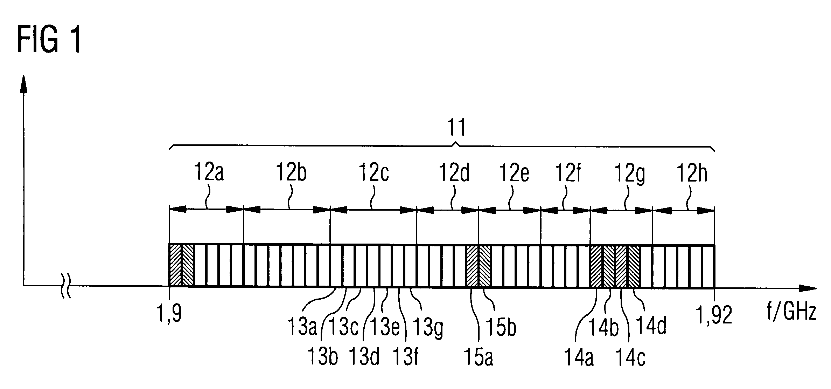

Figure 1 shows a frequency range 11 as used for mobile communication. It ranges from 1,9 to 1,92 GHz and has thus a bandwidth of 20 MHz. It may be divided into plural adjacent channels, sometimes called "sub-channels", as schematically shown by the vertical slots in Figure 1. The channels may be communication channels 13 (some of them indicated by 13a, ..., 13g). Others may be channel quality reporting channels 14 (some of them indicated by 14a, ..., 14d). And still others may be control channels 15 (see 15a, 15b) for overall control purposes. A beacon or broadcast channel may be one of these control channels. More than 1000 channels 13 to 15 may be provided within frequency range 11. Prior to commencement of communication, appropriate ones of these channels are assigned to a communication link between two particular devices by a suitable control means, sometimes called "scheduler". These assigned channels are then used for communication amongst said two particular devices, such as a mobile telephone and a base station. For example, it may be assumed that a scheduler within a base station assigns channels 13a, 13b, 13c and 13d to an upcoming communication between the base station and a particular mobile terminal. Said assignment is made in accordance with plural criteria such as availability, channel quality, user-subscribed quality of service, and other criteria. For making the assignment, amongst others, the device rendering the channel assignment needs to know the respective channel quality.

Channel quality is affected,by plural factors, some of them changing over time. The particular geography may influence channel quality, which is more or less constant. Another factor influencing channel quality is communication in other channels because it may cause cross talk. Further, channel quality depends on frequency reuse in neighbouring or generally other cells. If in a neighbouring cell (i.e. in a nearby base station) the same frequency is used for communication, this may also be experienced as interference in another base station and thus degrade quality of the respective channel. Particularly, when in all cells all channels may be used (reuse factor 1), interference from neighbouring cells will be a usual cause for channel degradation.

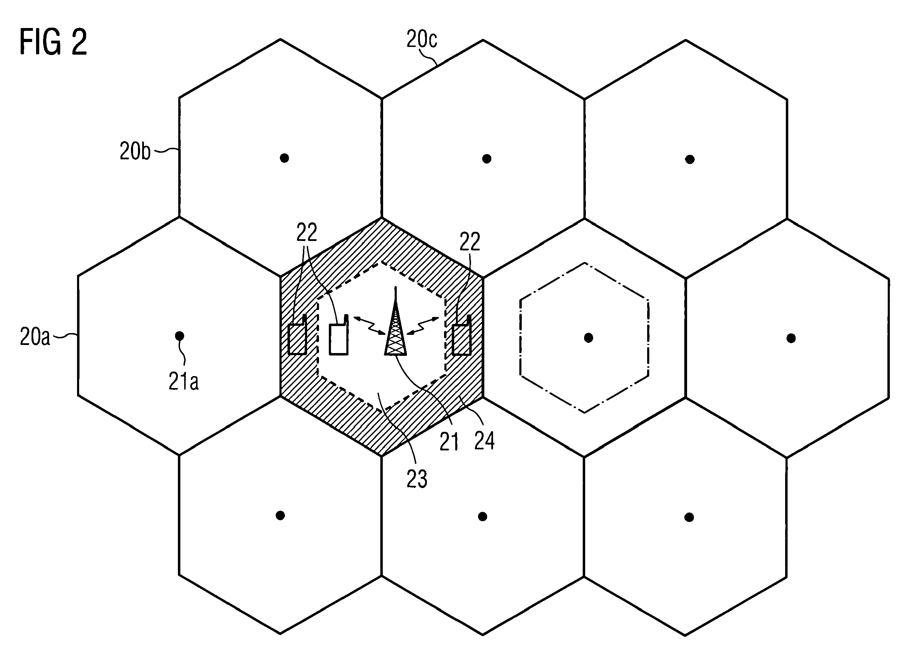

Figure 2 shows an ideal cell configuration. Assumed is a hexagonal allocation of base stations 21 which serve a respective cell 20 around them. But of course, needless to say, neither are the cells precisely delimited against each other, nor are they shaped hexagonal, nor needs the arrangement of the base stations follow a regular pattern. Each of the base stations 21 in each of the cells 20 is technically able of serving any of the channels shown in Figure 1. A reuse factor of 1 means that not only theoretically-technically, but also practically all base stations use all channels. Vice versa, there is no reservation scheme such that only a particular set of channels would be allowed to be used by one base station for avoiding interference with the same channel that might be used in an adjacent cell. Thus, it may be that for example channel 13a shown in Figure 1 is used both by base station 21a of cell 20a, and by base station 21b of cell 20b. This use may be at the same time, and the only separation is the changed intensity due to different distances of the respective mobile terminals from the respective base station.

For alleviating interference occurring at high reuse factors (i.e. up to 1), the "soft reuse scheme" has been suggested. Under this scheme, basically mobile terminals within one cell are distinguished in at least two groups, one group requiring only low sending power because, for example, they may be close to the base station, the other group requiring higher or full possible sending power, for example because they are more remote from the base station, i. e. close to the cell edge. For those mobile terminals that require only weaker sending power, such weaker sending in the respective channel(s) is used so that these low power channels will have lower reach and will thus generate less interference in neighbouring cell channels because their intensity has dropped sufficiently until reaching the neighbouring cell.

Figure 2 shows the situation schematically. 23 is a region where terminals 22 require only lower sending power, whereas hatched region 24 close to the edge of the cell 20 requires, due to the higher distance of the mobile terminals 22, higher sending power. It is pointed out in this respect that in figure 2 the discrimination between requiring higher or lower sending power is shown strictly geographically in dependence of the distance from the base station. However, also other factors may contribute to such a classification, such as temporal shielding (cell phone in elevator or tunnel), focussing effects, and the like. So, the grouping according to required sending power needs not be strictly geographically or in accordance with the distance from the base station. Other factors may contribute thereto as well so that, for example, also a terminal close to the base station may require a high sending power and vice versa. Each terminal itself can determine what is required by monitoring the incoming power on the respective channels.

Under the soft frequency use scheme, terminals requiring only lower sending power receive only such a lower sending power on their allocated channels, for avoiding interference with neighbouring cells as far as possible.

For properly allocating channels to connections between base station and terminals, it is generally desirable for the allocating entity to have information about channel quality. This is of particular importance under the soft frequency reuse scheme as mentioned above. Quality monitoring for channels is a well established technique. However, it requires significant system resources, particularly bandwidths and hardware installations. So far, terminals have fixed algorithms for monitoring the various channels 13, 14, 15 for their channel quality, and for reporting on their results. Quality evaluation needs not necessarily be done for each individual channel 13a ..., 14a ..., 15a ..., but may also be made for groups of channels, as indicated by reference numerals 12a, ..., 12g in Figure 11. But still, quality determination and channel quality information (CQI) reporting requires significant hardware and bandwidth resources.

In view of needs for example arising from the soft frequency reuse scheme, a partially still better knowledge of the allocating entity about channel qualities is desired, for example such that quality of individual channels is needed to be known. Vice versa, such detailed information needs not necessarily be required for each of the plural channels within the bandwidth.

It is the object of the invention to provide a method for channel quality information reporting and devices with channel quality reporting structures capable of rendering channel quality reporting that is better adapted to the actual needs.

This object is accomplished in accordance with the features of the independent claims. Dependent claims are directed on preferred embodiments of the invention.

A method for channel quality information (CQI) reporting amongst a first and a second device for wireless communication comprises the steps of the first device sending to the second device subset information designating one or more wireless channels or subsets of wireless channels, and the second device sending to the first device channel quality information (CQI) in relation to the designated wireless channels or in relation to the designated subsets or in relation to wireless channels of the designated subsets.

The first device may for example be a base station, and it can tell the second device, which may be a mobile terminal, through the subset information what it needs, particularly for which channels quality reporting is desired. The second device may then act accordingly, particularly by sending quality information only for desired channels or frequency ranges or groups of channels. Insofar, the subset information may to some extend be exclusive in a sense that it implicitly or explicitly determines that for some of the channels transmission of quality information is not required or required only with lower priority.

A first device for wireless communication, such as a base station, may implement steps of the above mentioned method. It comprises first communication means for communicating with a second device via one or more wireless channels, assembling means for assembling and sending to the second device subset information, and it comprises evaluation means for receiving and evaluating from the second device quality information prepared in accordance with the subset information.

A second device, for example a mobile terminal of a cell phone or of data processing equipment, may implement steps of the above method. It may comprise second communication means for communication with the first device through one or more channels. Further, it may comprise channel quality information determination means for determining communication quality in relation to one or more wireless channels, means for receiving the above mentioned subset information, and reporting means for assembling and sending quality information in accordance with the subset information.

Thus, the contributing devices of wireless communication, particularly wireless terminal and base station, render a system that requests, and thereupon delivers, well adapted quality information that may be well adapted to what is needed. A base station may find that it has sufficient information for a certain number of channels or frequency ranges, for example ranges 12a, 12b, 12c, 12e, 12f and 12g in Figure 1, but needs more information for ranges 12d and 12h. Accordingly, it would send subset information to a terminal requesting it to send quality information on ranges 12d and 12h, and/or on channels within these ranges. The receiving terminal would then send out quality information only in relation to these ranges or channels therein. Other ranges/channels may be left away because the base station has not requested it because they are not needed because related information has been obtained earlier from other terminals.

Further, control information may be exchanged amongst the devices, particularly be sent from the first to the second device, the control information suitable for configuring channel quality reporting on the side of the second device. It may for example determine what to do with, or how to treat, channels not designated by the subset information, and the like.

The subset information may be distributed to a terminal through a control/broadcast/beacon channel or through a CQI channel or through a dedicated channel.
In the following, embodiments of the invention will be described with reference to the attached drawings, in which
- Fig. 1: is a representation of a frequency range,
- Fig. 2: is a representation of the distribution of a cellular wireless system,
- Fig. 3: is a schematic representation of a first and a second device for wireless communication, and
- Fig. 4: is another embodiment of the system shown in Fig. 3.

Generally speaking, same reference numerals in this specification denote same components and features. Features described herein shall be considered to be combinable with each other as far as they do not technically exclude each other.

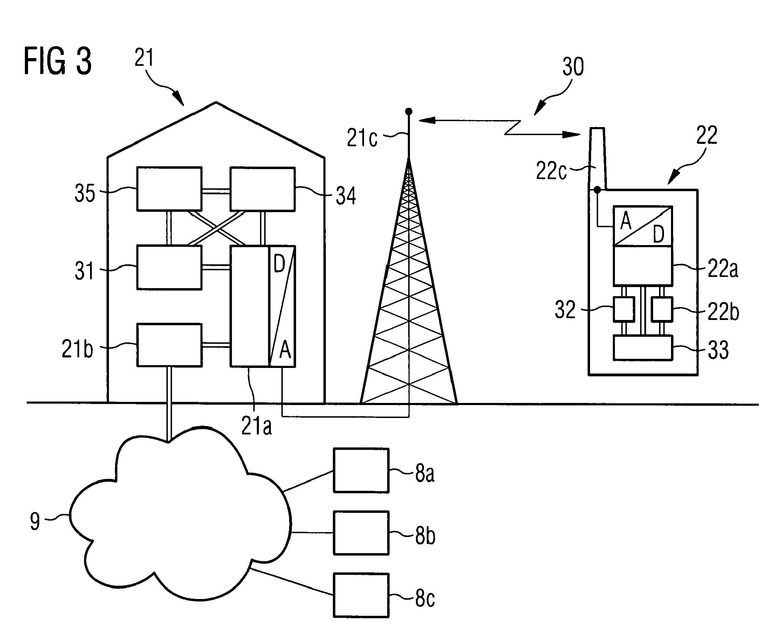

Figure 3 shows schematically a system where a base station 21 communicates through a wireless link 30 with a mobile terminal 22. The wireless link 30 may use one or more channels shown in Figure 1. These channels may be adjacent to each other, or may be distributed across the available range. Base station 21 may be connected to a stationary communication net 9, such as a usual telephone net, on which the internet may be formed. It may also comprise other wireless links. Other terminals 8a, 8b and 8c may be connected to the stationary net 9. 21b is a usual interface in the base station for interfacing between the telecommunication net 9 and a sending/receiving unit 21a. This unit performs all the required measures of modulation/demodulation, information stream combination and separation, implementation of frequency allocations, and the like. Most of these tasks may be done on the digital side. Digital values may be converted to analogue and then sent out via antenna 21c.

31 is an allocation means, sometimes called "scheduler", that allocates channels to individual communication tasks amongst the base station 21 and a particular requesting mobile terminal 22. For example, the scheduler 31 has determined prior to commencement of link 30 which channels shall be assigned to this link. The related determination result is passed to component 21a for implementation there.

Mobile terminal 22 has a sending and receiving antenna 22c. Signals may from there go through an amplifier, may be converted to digital and demodulated, decoded, and appropriately processed in means 22a, and may finally be output by a component 22b which may be an interface to other components or a display or an acoustical output or a data storage or the like.

Terminal 22 is capable of assembling and sending CQI. 32 is a CQI reporting means for assembling and sending through the second communication device CQI. 33 is a CQI determination means for determining channel quality in relation to one or more wireless channels. The information generated there may be passed to reporting means 32 for assembling CQI. This information may be sent out via means 22a, antenna 22c and appropriate channels, such as CQI channels 14 in Figure 1. The information is received at base station 21, demodulated and decoded in the usual way in the sending means 21a, and is sent from there to an evaluation means for receiving and evaluating the received quality information.

In the first device or base station 21 there is also provided an assembly means 35 for assembling and sending through the first communication means 21a to the second device 22 subset information designating one or more wireless channels or subsets of wireless channels.

The subset information assembled in means 35 may designate channels or groups of channels (subsets such as groups/subsets 12a, 12b, ... shown in Figure 1, wherein the channels in subset/group need not be adjacent to each other), for which channel quality information is desired. The designation of plural channels may be accomplished by individually indicating them, or by providing a pattern according to which they can be determined, such as start channel, step width, and channel, or the like. The subset information could also be or comprise a criterion for determining a subset or channels forming such a subset on the side of the second device 22. For example, it may be a power threshold or a SINR threshold (signal to interference and noise ration), to be used at the second device 22 for determining there to which subset a channel belongs by measuring said channel. The subset information could also be a combination of the various indications, for example a combination of determining certain channels, and giving a criterion.

Assembly of the subset information in means 35 can be done in accordance with data kept in the base station and received from elsewhere. Channels can be periodically polled and may thus appear periodically in a subset for wich CQI is required. They can also be checked in accordance with data traffic, requests from higher level or other system components, and the like.

When the subset information is received in the second communication device 22, CQI is assembled there in means 32 according to the received subset information, and is sent back. Determining CQI in means 33 may be made for all available channels or may also be made selectively in accordance with the received subset information.

Instead of a strict selection/deselection in accordance with the subset information, assembling and sending and determination of CQI may also be made such that determining CQI for channels designated through the subset information is made with priority, and thereafter the rest of the channels is examined for their quality.

The CQI is assembled in means 32 of the second device 22 and sent back to the first device 21. It is received by CQI evaluation 34, the results of which can be communicated to, and considered by, scheduler 31 for organizing channel assignment for communication between the first device 21 and plural second devices 22. The CQI may also be communicated to other components, either wireless or wire-bound.

The subset information is in some respect exclusive such that at least momentarily some or many of the channels are excluded from CQI reporting (and possibly also CQI determination) at the second device 22. Instead of excluding (temporarily) channels from CQI reporting, the subset information may also provide priorisation in that the designated channels are priorized as regards their CQI reporting (and possibly determination) over not designated channels.

Through the mentioned technique, data traffic for communication CQI can be reduced so that bandwidth for CQI reporting can be saved. Likewise, system components can be saved by reducing processing load required for CQI sending and possibly determination.

The subset information may be sent from the first device 21 to the second device 22 via a dedicated channel, or via CQI channels (14 in Figure 1) or via broadcast/beacon channels (15 in Figure 11).

Control information may also be exchanged amongst first device 21 and second device 22, i.e. sent from the first device 21 to a second device 22 and/or from the second device 22 to the first device 21. The control information may correlate to the subset information. It may be within the same message as the subset information, or may be separated therefrom. Distribution of the control information may be made via a dedicated channel or via a CQI channel 14 or via a beacon/broadcast channel 15. The control information may determine how to use the subset information, for example whether not-designated channels shall not at all be reported/determined, or whether only a priority assignment is desired (i.e. priorizing reporting/determination of channel quality for determined channels over not determined channels). Such information may be sent from the first to the second device, and may be taken there into appropriate consideration. The control information may be or comprise a selector for predetermined schemes. It may be a single bit selecting one out of two control schemes, such as selecting one out of either strictly exclusive or prioritized CQI sending/determination. It may be immediately appended to the subset information.

The subsets may be predetermined or more or less continuously configurable. In case of predetermined subsets, the second device 22 may have a priori knowledge on subsets (i.e. which channels belong to which subset), and the subset information may designate one or more of these predetermined subsets by appropriately identifying them through some kind of assigned identifiers.

But also predetermined subsets may change more or less frequently. Such changes of predetermined subsets may also be communicated via the mentioned control information to be stored for example in the second device for appropriate evaluation later in case the (changed) subset is chosen for CQI reporting/determination.

At least two subsets may be kept. They may be formed in accordance with criteria coming from the soft frequency reuse scheme. One subset of channels may comprise channels foreseen exclusively for relatively low sending power, to be used in the soft frequency reuse scheme. Another subset may comprise other channels, particularly channels that may be used both for relatively low or relatively high sending power, or exclusively for relatively high sending power. But also other or additional criteria may be used for forming subsets.

CQI reporting may be made for the channels used in an established link (i. e. used in ongoing information exchange), and/or for other channels. It may be made while the second device is switched on, but not used for communication, or may be used during ongoing communication.

The first device 21 may be a base station in a wireless system, particularly a NodeB. The second device may be user equipment such as a cell phone, a wireless data link, net movie cast or broadcast (such as TV) or the like.

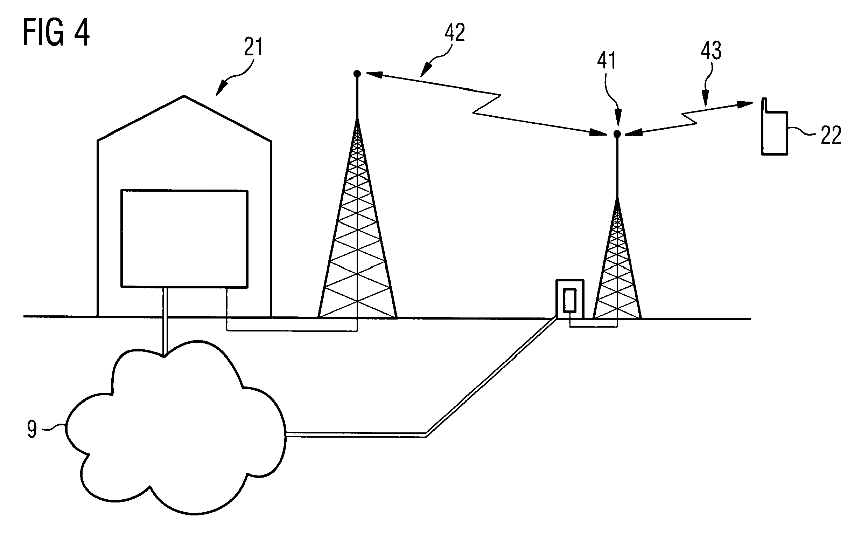

Each of the first and second devices can also be a relay between a base station/NodeB and a user equipment, as shown in Figure 4. The relay is indicated there with reference numeral 41. It may also be connected to a wire-bound net 9, but has also wireless connections 42, 43 to both base station 21 and a user equipment 22. Such a relay may incorporate the features described for the first device 21 (base station, NodeB) and/or the features described for the second device 22 (user equipment). The relay 41 may have an own scheduler for determining an own assignment of channels in its downlink communication with user equipment 22. It may act both as a base station/NodeB in one direction (towards user equipment 22) and as a user equipment (towards base station/NodeB 21).

The channel structure in the system shaped according to the invention may be as shown schematically in figure 1, and likewise the cell structure may qualitatively be as described with reference to figure 2. Information exchange amongst two particular devices (including pay-load and/or administrative information, such as the subset information, CQI, control information) may be done chunk-wise, i. e. through plural channels temporarily (e.g. in the range of several 100 µs up to some ms) assigned to the link between said two devices, wherein the assignment may, caused by a scheduler 31, change after every transmitted chunk. The overall system may be a multi-access system, particularly an OFDMA (Orthogonal Frequency Division Multiple Access) System.

## Claims

1. Method for channel quality reporting amongst a first and a second device for wireless communication capable of communicating via plural wireless channels,
comprising the steps of
the first device sending to the second device subset information designating one or more wireless channels or subsets of wireless channels of the plural wireless channels, and
the second device sending to the first device channel quality information in relation to the designated wireless channels or in relation to the designated subsets or in relation to the wireless channels of the designated subsets.

2. The method of claim 1, wherein the first device keeps at least two subsets of wireless channels, one of them comprising channels exclusively assigned to a first group of second devices, the other comprising other channels.

3. The method of claim 1 or 2, wherein the second device, upon receipt of the subset information, determines a quality information only for the designated subsets or channels of the designated subsets.

4. The method according to one or more of the preceding claims, wherein the first device changes the assignment of a channel to a subset and sends changed subset information to the second device.

5. The method according to one or more of the preceding claims, wherein sending the subset information is made on the same channel as sending the quality information.

6. The method according to one or more of the claims 1 to 4, wherein sending the subset information is made on another channel as sending the quality information.

7. The method according to one or more of the preceding claims, wherein the subset information comprises ...

8. The method according to one or more of the preceding claims, wherein the quality information comprises a joint quality measure for plural channels, preferably for all channels of a designated subset.

9. The method according to one or more of the claims 1 to 7, wherein the quality information comprises quality measures for individual channels, preferably for all channels of a designated subset.

10. The method according to one or more of the preceding claims, comprising one or more of the following features:
the first device is a base station or a relay station,
the second device is a user equipment or a relay station,
the channels are OFDMA channels,
a subset of channels is predefined and identifiable in the subset information through a subset identifier,
a subset of channels is defined in the subset information by identifying channels thereof,
the first group of devices is a group of second devices requiring only a relatively low sending power from the first device.

11. A first device for wireless communication, particularly for implementing steps of the method of one or more of the preceding claims, comprising
first communication means for communicating with a second device for wireless communication via one or more of plural wireless channels,
assembling means for assembling and sending through the firs communication means to the second device subset information designating one or more wireless channels or subsets of wireless channels of the plural wireless channels, and
evaluation means for receiving and evaluating from the second device quality information in relation to the designated wireless channels or in relation to the designated subsets or in relation to the wireless channels of the designated subsets.

12. The device of claim 11 which is a base station, wherein the communication means comprises scheduling means for assigning one or more of said channels to communication with a particular second device, the assignment being made in accordance with said received quality information.

13. The device of claim 11 which is a wireless relay station between a base station and the second device.

14. A second device for wireless communication, particularly for implementing steps of the method of one or more of the preceding method claims, comprising
second communication means for communicating with a first device for wireless communication via one or more of plural wireless channels,
channel quality information determination means for determining communication quality in relation to one or more wireless channels,
means for receiving through the second communication means from the first device subset information designating one or more wireless channels or subsets of wireless channels of the plural wireless channels, and
reporting means for assembling and sending through the second communication device to the first device quality information in relation to the designated wireless channels or in relation to the designated subsets or in relation to the wireless channels of the designated subsets.

15. The device of claim 14 which is a user equipment.

16. The device of claim 14 or 15 which is a wireless relay station between the first device and a user equipment.
